# FASCICULE DE BREVET EUROPEEN

(11) **EP 3 093 208 B1**
(45) Date de publication et mention de la délivrance du brevet: **08.11.2017**
(21) Numéro de dépôt: 16169035.9
(22) Date de dépôt: 10.05.2016
(51) Int. Cl.: B61L 1/20, B61L 15/00, B60L 9/00

(54) **PROCÉDÉ ET DISPOSITIF POUR CONTRÔLER UN ÉQUIPEMENT DE DÉTECTION D'HARMONIQUES POUR VÉHICULE FERROVIAIRE**
VERFAHREN UND VORRICHTUNG ZUR KONTROLLE EINER AUSRÜSTUNG ZUR DETEKTION VON OBERSCHWINGUNGEN FÜR SCHIENENFAHRZEUG
METHOD AND DEVICE FOR CONTROLLING A HARMONIC DETECTION SYSTEM FOR A RAILWAY VEHICLE

(30) Priorité: 11.05.2015 FR 1554181
(43) Date de publication de la demande: 16.11.2016
(73) Titulaire: SNCF Mobilités, 93200 Saint-Denis (FR)
(72) Inventeur: GOERES, David, 72000 LE MANS (FR)
(74) Mandataire: Pontet Allano & Associes

(56) Documents cités:
- EP-A1- 1 108 634
- EP-A1- 1 447 298
- GB-A- 2 232 836
- US-A- 5 711 497
- MEYER M: "AKTIVE STOERSTROMFILTER FUER DIE NETZSEITE VON UMRICHTERLOKOMOTIVEN", EB- ELEKTRISCHE BAHNEN, DIV-DEUTSCHER INDUSTRIEVERLAG, vol. 91, no. 3, 1 mars 1993 (1993-03-01), pages 80-84,86, XP000363201, ISSN: 0013-5437
- DAVID GOÉRÈS: "Interactions électriques entre l'infrastructure et les matériels roulants ferroviaires", REVUE GENERALE DES CHEMINS DE FER, CENTRALE DES REVUES DUNOD-GAUTHIER-VILLARS. PARIS, FR, no. 225, 1 mars 2013 (2013-03-01), pages 22-37, XP001526501, ISSN: 0035-3183

## Description

La présente invention concerne un procédé et un dispositif pour contrôler un équipement de détection d'harmoniques pour véhicule ferroviaire. Elle concerne également un équipement de détection d'harmoniques et un véhicule ferroviaire mettant en oeuvre un tel procédé ou un tel dispositif.

Le domaine de l'invention est le domaine des équipements de détection et de gestion d'harmoniques générés par/dans un véhicule ferroviaire.

### Etat de la technique

La plupart des voies ferrées sont équipées de systèmes de détection de véhicules circulant sur ces voies parmi lesquels on trouve les « circuits de voie » qui réalisent une détection continue.

Le circuit de voie comprend un émetteur positionné en amont d'un canton de voie ferrée pour injecter un signal électrique dans les files de rail d'une voie ferrée. Il comprend également un détecteur disposé en aval du canton de voie ferrée pour détecter la présence d'un véhicule ferroviaire en détectant un court-circuit, réalisé entre les deux files d'une voie ferrée par les essieux conducteurs des véhicules ferroviaires, déviant le signal électrique injecté par l'émetteur.

Or, lorsqu'un véhicule ferroviaire électrique alimenté par un signal électrique fourni par une caténaire roule sur un canton de voie ferrée, il génère des courants harmoniques qui sont injectés dans le circuit de voie. Ces courants harmoniques peuvent dans certains cas présenter la même fréquence que celle du courant utilisé dans le circuit de voie. Ces courants harmoniques viennent alors perturber le fonctionnement du circuit de voie en se substituant au courant utilisé dans le circuit de voie, ce qui peut rendre plus difficile la détection d'un véhicule ferroviaire dans le canton par le récepteur du circuit de voie.

Pour éviter ce dysfonctionnement, les véhicules ferroviaires sont équipés d'un équipement de détection de courant harmoniques dont la fonction est d'ouvrir le disjoncteur du véhicule ferroviaire lorsque celui génère des courants harmoniques perturbateurs pendant une durée supérieure à une durée prédéterminée.

Cependant, ces équipements de détection de courants harmoniques sont actifs tout le temps, ce qui peut générer des disjonctions inutiles et intempestives sur des cantons non équipés de circuit de voie. Ces disjonctions provoquent des retards et des transbordements, et nuisent au fonctionnement du véhicule ferroviaire. Le document EP 1 447 298 A1 décrit un tel système de détection actif en permanence. Un but de la présente invention est de remédier à ces inconvénients.

Un autre but de l'invention est de proposer un procédé et un dispositif de contrôle d'un équipement de détection de courants harmoniques permettant de diminuer les retards et les transbordements.

Un autre but de l'invention est de proposer un procédé et un dispositif de contrôle d'un équipement de détection de courants harmoniques améliorant le fonctionnement d'un tel équipement.

Enfin, un autre but de l'invention est de proposer un procédé et un dispositif de contrôle d'un équipement de détection de courants harmoniques évitant des disjonctions intempestives.

### Exposé de l'invention

L'invention permet d'atteindre au moins l'un de ces buts par un procédé pour contrôler un équipement de détection de courants harmoniques équipant un véhicule ferroviaire, caractérisé en ce qu'il comprend au moins une itération des étapes suivantes :
- détermination de la présence ou non d'au moins un circuit de voie sur au moins une section d'une voie ferrée, et
- activation ou désactivation, en fonction de ladite détermination, dudit équipement de détection de courants harmoniques au moins sur ladite section de ladite voie ferrée.

Ainsi, le procédé selon l'invention propose d'utiliser l'équipement de détection de courants harmoniques uniquement sur les sections de voie ferrée, ou sur des voies ferrées, équipées d'un circuit de voie, et de désactiver ledit équipement sur une section de voie ferrée, ou sur une voie ferrée, qui n'est pas équipée de circuit de voie. En effet, lorsqu'une section de voie ferrée n'est pas équipée de circuit de voie, l'injection de courants harmoniques dans ladite section de voie ferrée ne présente pas d'inconvénient. Ainsi, le procédé selon l'invention permet d'éviter que l'équipement de détection de courants harmoniques disjoncte un véhicule ferroviaire roulant sur une section de voie ferrée qui n'est pas équipé de circuit de voie. Par conséquent, le procédé selon l'invention permet d'éviter des disjonctions intempestives sur des sections de voie ferrée non équipées de circuit de voie, ce qui diminue les retards et les transbordements et améliore le fonctionnement des équipements de détection de courants harmoniques.

L'étape d'activation, respectivement de désactivation, de l'équipement de détection de courants harmoniques peut comprendre une mise sous tension, respectivement une mise en veille, dudit équipement. Dans ce cas, lors de cette étape, l'équipement de détection de courants harmoniques est « allumé », respectivement « éteint », lorsque la section de voie ferrée est équipée, respectivement n'est pas équipée, d'un circuit de voie.

Alternativement, l'étape d'activation, respectivement de désactivation, de l'équipement de détection de courants harmoniques peut comprendre une activation, respectivement une désactivation, d'une commande d'ouverture du disjoncteur émise par ledit équipement. Dans ce cas, l'équipement de détection de courants harmoniques est allumé à tout moment. Par contre, l'exécution d'une commande d'ouverture du disjoncteur du véhicule ferroviaire émise par l'équipement est activée ou autorisée ou encore confirmée, respectivement désactivée ou interdite ou encore infirmée, lorsque la section de voie ferrée est équipée, respectivement n'est pas équipée, d'un circuit de voie.

L'étape de détermination de présence d'un circuit de voie peut comprendre une étape de consultation d'une base de données mémorisant pour au moins une voie ferrée, ou au moins une section d'une voie ferrée, la présence ou non d'un circuit de voie sur ladite voie ferrée, ou sur ladite section de voie ferrée.

Une telle base de données peut être locale au véhicule ferroviaire équipé par l'équipement de détection de courants harmoniques.

Alternativement, une telle base de données peut être située sur un site distant au véhicule ferroviaire équipé par l'équipement de détection de courants harmoniques. Dans ce cas, l'étape de consultation peut comprendre une connexion au site distant, par l'intermédiaire d'une connexion sans fil telle qu'une connexion au travers d'un réseau de téléphonie mobile.

La base de données peut mémoriser, pour chaque section de voie ferrée, une donnée signalant la présence ou non d'un circuit de voie en association avec un identifiant de ladite section de voie ferrée.

L'identifiant d'une section de voie peut par exemple comprendre une donnée d'identification préalablement attribuée à la dite section. Alternativement ou en plus, une section de voie peut être identifiée avec au moins une donnée de géolocalisation de ladite section, en particulier une donnée de géolocalisation du début de la section et/ou une donnée de géolocalisation de la fin de la section.

Pour au moins une, en particulier chaque, section de voie ferrée, la donnée de présence ou d'absence d'un circuit de voie peut être une donnée binaire : l'une des valeurs, par exemple « 1 » signalant la présence d'un circuit de voie et l'autre des valeurs, par exemple « 0 » l'absence d'un circuit de voie.

Selon un exemple de réalisation non limitatif, l'étape de consultation de la base de données peut être réalisée préalablement à ce que le véhicule ferroviaire n'emprunte ladite voie ferrée, respectivement ladite section de voie ferrée, en fonction d'au moins une donnée relative :
- à un trajet que le véhicule ferroviaire va réaliser, ou
- à ladite voie ferrée, respectivement à ladite section.

Par exemple, pour un trajet donné, la consultation de la base de données peut être réalisée avant le début du trajet. Les données relatives à la présence ou non d'un circuit de voie pour chaque section constituant ledit trajet peuvent être consultées et mémorisées dans le véhicule ferroviaire, ces données étant ensuite utilisées lors du trajet pour activer ou désactiver l'équipement de détection de courants harmoniques.

Le procédé selon l'invention peut en outre comprendre préalablement à l'étape de consultation, une étape de détermination d'une position géographique du véhicule sur la voie ferrée, ladite étape de consultation étant réalisée en fonction de ladite position géographique.

Ainsi, la consultation de la base de données peut être réalisée, alternativement ou en plus, pendant que le véhicule ferroviaire roule sur une voie ferrée pour déterminer si un circuit de voie équipe :
- la section sur laquelle le véhicule ferroviaire se trouve au moment de la consultation, et/ou
- au moins une section suivante sur laquelle le véhicule s'apprête à rouler avant que le véhicule ferroviaire n'entre sur ladite au moins une section.

La détermination de la position géographique du véhicule sur la voie ferrée peut être réalisée :
- par un ou plusieurs modules de géolocalisation, tel qu'un module GPS, et/ou
- par lecture d'un ou des panneaux disposés sur ou en périphérique de la voie ferrée et signalant, directement ou indirectement, une position géographique.

Avantageusement la détermination de la position géographique du véhicule peut être réalisée par deux modules de géolocalisation différents de sorte à rendre cette détermination plus sure.

Alternativement, ou en plus, l'étape de détermination de la présence d'un circuit de voie peut comprendre une étape de détection d'une balise de signalisation, disposée sur ou en périphérie de la voie ferrée, signalant la présence ou l'absence dudit circuit de voie.

Une telle balise peut être une balise visuelle ou une balise radio.

Alternativement, ou en plus, l'étape de détermination de la présence d'un circuit de voie peut comprendre une étape de détection d'un signal émis par ledit circuit de voie sur au moins une file de rail.

En effet, lorsqu'un véhicule ferroviaire roule sur une section de voie ferrée équipée de circuit de voie, les essieux dudit véhicule viennent shunter le circuit de voie de sorte qu'au moins une partie du signal émis par l'émetteur du circuit de voie est détourné par les essieux dudit véhicule ferroviaire et traverse lesdits essieux. Ce signal traversant par les essieux dudit véhicule ferroviaire peut être utilisé pour détecter la présence du circuit de voie.

Suivant un autre aspect de la même invention, il est proposé un dispositif pour contrôler un équipement de détection de courants harmoniques équipant un véhicule ferroviaire, comprenant des moyens pour mettre en oeuvre les étapes du procédé selon l'invention.

En particulier, le dispositif selon l'invention peut comprendre :
- au moins un moyen de détection agencé pour détecter la présence ou non d'au moins un circuit de voie sur au moins une partie d'une voie ferrée, et
- un moyen d'activation ou de désactivation agencé pour activer ou désactiver ledit équipement sur au moins une partie de ladite voie ferrée en fonction d'au moins signal de présence ou d'absence fournie par ledit moyen de détection.

Le moyen de détection de la présence ou non d'un circuit de voie peut comprendre :
- au moins un module de consultation d'une base de données, locale ou distante, mémorisant pour au moins une voie ferrée, ou au moins une section d'une voie ferrée, la présence ou non d'un circuit de voie sur ladite voie ferrée, ou sur ladite section de voie ferrée, et éventuellement un moyen de localisation géographique du véhicule ; et/ou
- un moyen de détection visuel ou radio, d'une balise de signalisation, respectivement visuel ou radio, signalant la présence ou l'absence d'un circuit de voie, disposée au niveau de ladite voie ferrée ; et/ou
- un moyen de détection d'un signal émis par ledit circuit de voie sur au moins une file de rail de la voie ferrée.

Le moyen d'activation ou de désactivation de l'équipement de détection de courants harmoniques peut comprendre un moyen de contrôle de l'alimentation dudit équipement, mettant ledit équipement sous tension ou hors tension.

Alternativement, le moyen d'activation ou de désactivation de l'équipement de détection de courants harmoniques peut comprendre un moyen autorisant ou interdisant la réalisation d'une commande d'ouverture du disjoncteur du véhicule ferroviaire émise par ledit équipement disjonction. Dans ce cas, le moyen d'activation ou de désactivation est positionné entre l'équipement de détection de courants harmoniques et le disjoncteur du véhicule ferroviaire.

Suivant un autre aspect de la même invention, il est proposé un équipement de détection de courants harmoniques pour véhicule ferroviaire comprenant :
- un dispositif selon l'invention, ou
- des moyens agencés pour réaliser toutes les étapes du procédé selon l'invention.

Suivant encore un autre aspect de la même invention, il est proposé un véhicule ferroviaire comprenant :
- un équipement de détection de courants harmoniques selon l'invention, ou
- un dispositif selon l'invention, ou
- des moyens agencés pour réaliser toutes les étapes du procédé selon l'invention.

Un tel véhicule ferroviaire peut être n'importe quel véhicule ferroviaire roulant une sur une voie ferrée, tel que par exemple un train, un tramway ou un tram-train, etc.

### Description des figures et modes de réalisation

D'autres avantages et caractéristiques apparaîtront à l'examen de la description détaillée d'un mode de réalisation nullement limitatif, et des dessins annexés sur lesquels
- les FIGURES 1a et 1b sont des représentations schématiques du fonctionnement d'un circuit de voie ;
- la FIGURE 2 est une représentation schématique sous la forme d'un diagramme d'un premier exemple d'un procédé selon l'invention ;
- la FIGURE 3 est une représentation schématique sous la forme d'un diagramme d'un deuxième exemple d'un procédé selon l'invention ;
- la FIGURE 4 est une représentation schématique sous la forme d'un diagramme d'un troisième exemple d'un procédé selon l'invention ;
- la FIGURE 5 est une représentation schématique d'un exemple de réalisation d'un dispositif selon l'invention ;
- la FIGURE 6 est une représentation schématique d'une première configuration d'utilisation du dispositif selon l'invention ; et
- la FIGURE 7 est une représentation schématique d'une deuxième configuration d'utilisation du dispositif selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieur.

Sur les figures les éléments communs à plusieurs figures conservent la même référence.

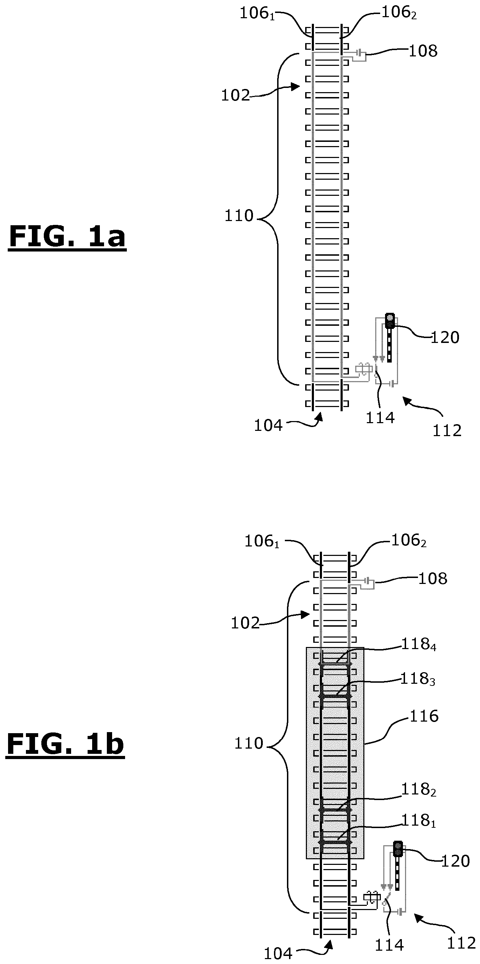

Les FIGURES 1a et 1b donnent une représentation schématique du fonctionnement d'un circuit de voie.

Sur les FIGURES 1a et 1b, le circuit de voie 102 équipe une voie ferrée 104 comprenant deux files de rail 106₁ et 106₂.

Dans l'exemple représenté sur les FIGURES 1a et 1b, le circuit de voie 102 est formé par :
- les deux files de rail 106, et 106₂,
- un générateur 108 connecté à chacune des files de rails 106 et 108 au niveau d'une première extrémité d'une section donnée 110 de la voie ferrée 104, et
- un équipement 112 de détection d'un véhicule ferroviaire sur ladite section de voie ferrée, connecté à chacune des files de rails 106 au niveau de l'autre extrémité de la voie ferrée 104. Un tel équipement de détection 112 d'un véhicule ferroviaire comprend un relais 114 dont la position dépend de la puissance du signal électrique circulant dans le circuit de voie 102.

Sur la FIGURE 1a il n'y a aucun véhicule ferroviaire sur la section 110 de voie ferrée 104 équipée par le circuit de voie 102. L'équipement de détection 112 est donc alimenté par le générateur 110 et ne détecte aucun véhicule.

Sur la FIGURE 1b, un véhicule ferroviaire 116 se trouve sur la section 110 de la voie ferrée 104 équipée par le circuit de voie 102. Au moins un des essieux conducteurs 118₁-118₄ du véhicule ferroviaire 116 forme alors un court-circuit entre les files de rail 106₁ et 106₂. La puissance reçue par l'équipement de détection 112 diminue, ce qui est synonyme de présence d'un véhicule ferroviaire sur la section 110 de voie ferrée 104 équipée par le circuit de voie102. Le relais 114 change de position et commande un changement au niveau par exemple d'un feu de signalisation 120, qui passe du vert au rouge

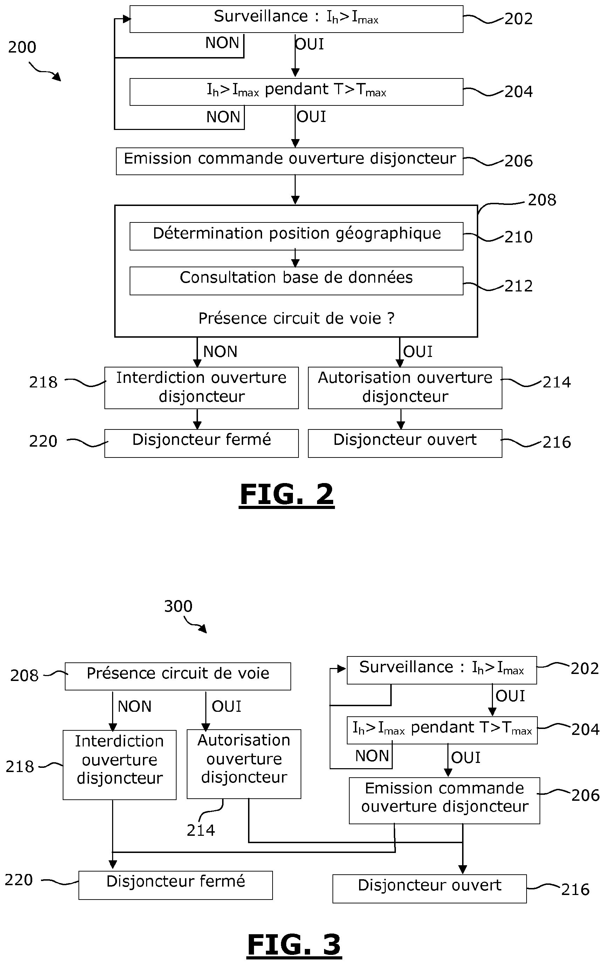

La FIGURE 2 est une représentation schématique sous la forme d'un diagramme d'un premier exemple du procédé de contrôle, selon l'invention, d'un équipement de détection de courants harmoniques équipant un véhicule ferroviaire selon l'invention.

Le procédé 200 représenté sur la FIGURE 2 comprend une étape 202 de surveillance de la présence d'un courant harmonique Iₕ généré par le véhicule ferroviaire, qui dans le présent exemple est un train. Lors de cette étape 202, le procédé détermine si le courant harmonique Iₕ est supérieur à un seuil maximum prédéterminé, noté Iₘₐₓ. Si le courant harmonique Iₕ est inférieur au seuil Iₘₐₓ, l'étape 202 est réitérée, par exemple à une fréquence prédéterminée.

Si le courant harmonique Iₕ est supérieur au seuil Iₘₐₓ, une étape 204 détermine si le courant harmonique Iₕ persiste pendant une durée T supérieure à une durée maximale autorisée prédéterminée, notée Tₘₐₓ. Si ce n'est pas le cas, le procédé 200 reprend à l'étape 202, par exemple à une fréquence prédéterminée.

Si le courant harmonique Iₕ persiste pendant une durée T supérieure à la durée seuil Tₘₐₓ, le procédé comprend une étape 206 d'émission d'une commande d'ouverture du disjoncteur.

Suite à cette étape 206 d'émission d'une commande d'ouverture du disjoncteur du train, le procédé 200 comprend une étape 208 de détermination de la présence ou non d'un circuit de voie équipant la section de voie ferrée, en vue d'autoriser ou d'interdire l'ouverture du disjoncteur du train.

Cette étape 208 comprend une étape 210 de détermination de la position géographique actuelle du train, noté Pₐ. La détermination de la position géographique peut être réalisée :
- au moyen d'un module de géolocalisation, de type GPS par exemple ; et/ou
- au moyen d'un lecteur radio ou visuel d'au moins une balise de signalisation radio ou visuelle, agencée au niveau de la voie ferroviaire.

Ensuite, l'étape 208 comprend une étape 212 qui réalise une consultation d'une base de données dans laquelle est mémorisée, en association avec chaque section de voie ferrée, une donnée signalant la présence ou non d'un circuit de voie sur ladite section. Cette étape 212 fournit donc une donnée, par exemple binaire, signalant la présence ou non d'un circuit de voie à la position géographique actuelle du train.

Lors de l'étape 212, la consultation de la base de données peut être réalisée :
- au travers d'une connexion filaire, ou sans fil de type WIFI ou BLUETOOTH, à un moyen de mémorisation dans lequel la base de données est mémorisée, lorsque la base de données est mémorisée localement au train, ou
- au travers d'une connexion sans fil à un moyen de mémorisation distant, lorsque la base de données est mémorisée sur un site distant du train.

Alternativement l'étape 208 de détermination de la présence ou non d'un circuit de voie peut comprendre une mesure d'un courant circulant dans les files de rail de la voie ferrée et une comparaison de ce courant à une valeur de courant prédéterminée, correspondant au courant délivré dans les files de rail par un émetteur d'un circuit de voie.

Lorsqu'à l'étape 208, la donnée de présence signale une présence d'un circuit de voie, le procédé 200 comprend, suite à l'étape 208, une étape 214 autorisant l'ouverture du disjoncteur du train pour empêcher l'injection du courant harmonique Iₕ dans les files de rail. Lors d'une étape 216, le disjoncteur est ouvert s'il se trouvait précédemment dans un état fermé ou maintenu ouvert s'il se trouvait déjà dans un état ouvert. Le procédé 200 est ensuite réitéré à une fréquence prédéterminée ou pour la prochaine section de voie ferrée à partir de l'étape 202.

Lorsqu'à l'étape 208, la donnée de présence signale une absence d'un circuit de voie, le procédé 200 comprend, suite à l'étape 208, une étape 218 interdisant une ouverture du disjoncteur du train. Ensuite, lors d'une étape 220, le disjoncteur est fermé s'il se trouvait précédemment dans un état ouvert ou maintenu fermé s'il se trouvait déjà dans un état fermé. Le procédé 200 est ensuite réitéré à une fréquence prédéterminée ou pour la prochaine section de voie ferrée à partir de l'étape 202.

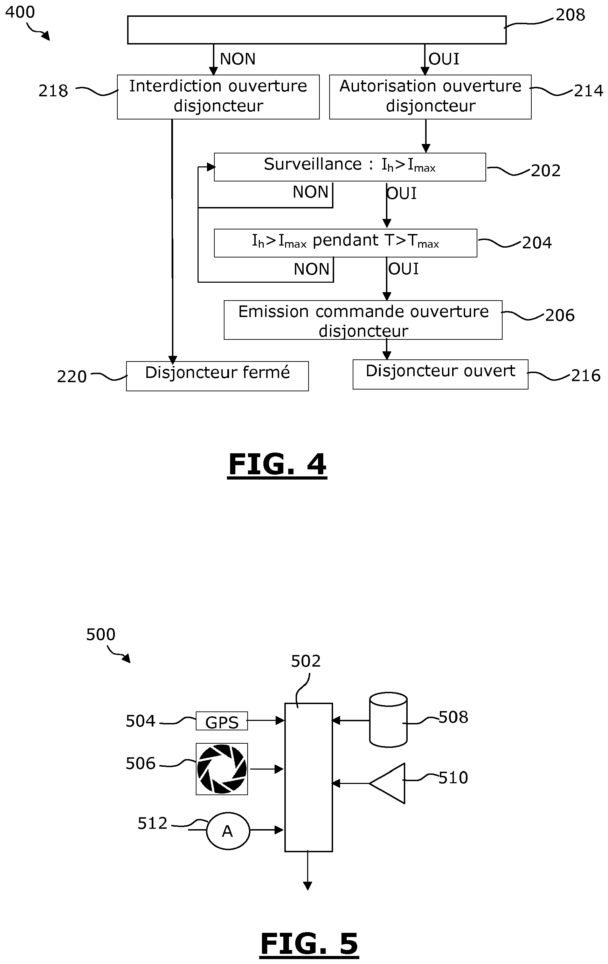

Bien entendu l'ordre de réalisation des étapes qui viennent d'être décrites peut être différent de sorte que l'étape 208, et éventuellement les étapes 214 et 218, peu(ven)t être réalisée(s) en même temps ou avant l'étape 206. Les FIGURES 3 et 4 sont des représentations schématiques de tels exemples de réalisation.

La FIGURE 3 est une représentation schématique sous la forme d'un diagramme d'un deuxième exemple du procédé de contrôle, selon l'invention, d'un équipement de détection de courants harmoniques équipant un véhicule ferroviaire selon l'invention.

Le procédé 300 comprend les mêmes étapes que le procédé 200. Dans le procédé 300, les étapes 208, 218 et 214 sont réalisées en parallèle des étapes 202-206.

La FIGURE 4 est une représentation schématique sous la forme d'un diagramme d'un troisième exemple du procédé de contrôle, selon l'invention, d'un équipement de détection de courants harmoniques équipant un véhicule ferroviaire selon l'invention.

Le procédé 400 comprend toutes les étapes des procédés 200 et 300 des FIGURES 2 et 3.

Dans le procédé 400 les étapes 208, 214 et 218 sont réalisées avant les étapes 202-206. En particulier, dans le procédé 400, les étapes 202-206 sont réalisées uniquement lorsque l'étape 208 détermine la présence d'un circuit de voie et autorise l'ouverture du disjoncteur. Dans ce mode de réalisation, l'étape 214 d'autorisation d'ouverture du disjoncteur peut consister en :
- la mise sous tension, ou l'allumage, de l'équipement détection de courants harmoniques ; ou
- une autorisation de l'équipement de détection de courants harmoniques à émettre ou réaliser une commande d'ouverture du disjoncteur.

D'une manière similaire, dans ce mode de réalisation, l'étape 218 d'interdiction d'ouverture du disjoncteur peut consister en :
- la mise en veille, ou l'extinction, de l'équipement détection de courants harmoniques ; ou
- une interdiction de l'équipement de détection de courants harmoniques à émettre ou réaliser une commande d'ouverture du disjoncteur.

La FIGURE 5 est une représentation schématique sous la forme d'un diagramme d'un exemple non limitatif du dispositif de contrôle, selon l'invention, d'un équipement de détection de courants harmoniques équipant un véhicule ferroviaire selon l'invention.

Le dispositif 500 représenté sur la FIGURE 5 comprend, un module de gestion 502, qui peut être un processeur, configuré pour déterminer la présence ou non d'un circuit de voie sur une section de voie ferrée.

La détermination de la présence ou non d'un circuit de voie pouvant être réalisée de différentes manières, telles que décrites plus haut, le dispositif 500 peut comprendre un moyen de détermination de la localisation géographique du véhicule ferroviaire, à savoir par exemple :
- une balise 504 de géolocalisation, de type GPS ; et/ou
- au moins un lecteur 506 radio ou visuel d'au moins une balise de signalisation radio ou visuelle, agencée au niveau de la voie ferroviaire.

Dans ce cas, le dispositif 500 peut comprendre une base de données locale 508, ou un moyen de communication sans fil 510 avec un site distant sur lequel se trouve une base de données, mémorisant en association avec des données de géolocalisation d'une section de voie ferrée, ou un identifiant d'une section de de voie ferrée, la présence ou non d'un circuit de voie sur ladite section de voie ferrée.

Alternativement, ou en plus, le dispositif 500 peut comprendre un module 512 de mesure d'un courant parcourant les files de rail, tel qu'un ampèremètre, pour déterminer la présence ou non d'un circuit de voie dans une section de voie ferrée.

En fonction des signaux/données reçu(e)s des différents éléments 504-512, le module de gestion 502 émet une donnée d'autorisation ou d'interdiction d'ouverture d'un disjoncteur d'un véhicule ferroviaire, à savoir par exemple :
- une donnée ou un signal validant ou invalidant une commande d'ouverture d'un disjoncteur émise par un équipement de détection de courants harmoniques ; ou
- une donnée ou un signal d'allumage ou de mise en veille d'un équipement de détection de courants harmoniques.

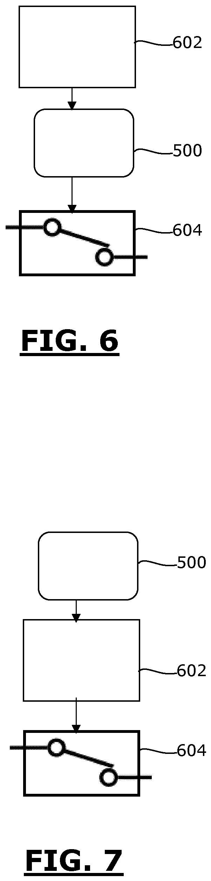

La FIGURE 6 est une représentation schématique d'une première configuration d'utilisation du dispositif selon l'invention.

Dans la configuration représentée sur la FIGURE 6, le dispositif selon l'invention, par exemple le dispositif 500 de la FIGURE 5, est positionné entre l'équipement 602 de détection de courants harmoniques et le disjoncteur 604 du véhicule ferroviaire. Ainsi, le dispositif 500 reçoit une commande d'ouverture du disjoncteur, et en fonction de la présence ou non d'un circuit de voie sur la section de voie ferrée considérée, il autorise ou non ladite commande d'ouverture.

La FIGURE 7 est une représentation schématique d'une deuxième configuration d'utilisation du dispositif selon l'invention.

Dans la configuration représentée sur la FIGURE 7, le dispositif selon l'invention, par exemple le dispositif 500 de la FIGURE 5, est positionné en amont de l'équipement 602 de détection de courants harmoniques de sorte que l'équipement 602 de détection de courants harmoniques se trouve entre le dispositif 500 et le disjoncteur 604 du véhicule ferroviaire.

Dans cette configuration, le dispositif 500 commande une mise sous tension ou une mise en veille de l'équipement 602 de détection de courants harmoniques en fonction de la présence ou non d'un circuit de voie sur la section de voie ferrée considérée. Ainsi, lorsque la section de voie ferrée comporte un circuit de voie, le dispositif 500 met sous tension, ou allume, l'équipement 602 qui est alors autorisé à ouvrir le disjoncteur 604. Par contre, lorsque la section de voie ferrée ne comporte pas de circuit de voie, le dispositif 500 met en veille, ou éteint, l'équipement 602 qui n'est alors pas autorisé à ouvrir le disjoncteur 604.

Suivant une configuration alternative, non représentée sur les FIGURES, le dispositif 500, ou les éléments constituant le dispositif 500, peu(ven)t être directement intégré(s) dans l'équipement de détection de courants harmoniques.

Bien entendu, l'invention n'est pas limitée aux exemples détaillés ci-dessus.

## Revendications

1. Procédé (200 ; 300 ; 400) pour contrôler un équipement (602) de détection de courants harmoniques équipant un véhicule ferroviaire, **caractérisé en ce qu'**il comprend au moins une itération des étapes suivantes :
- détermination (208) de la présence ou non d'au moins un circuit de voie (102) sur au moins une section (110) d'une voie ferrée (104), et
- activation ou désactivation (214, 218), en fonction de ladite détermination, dudit équipement de détection (602) de courants harmoniques au moins sur ladite section (110) de ladite voie ferrée (104).

2. Procédé (200 ; 300 ; 400) selon la revendication 1, **caractérisé en ce que** l'étape (208) de détermination de présence comprend une étape (212) de consultation d'une base de données (508) mémorisant pour au moins une voie ferrée (104), ou au moins une section (110) d'une voie ferrée, la présence ou non d'un circuit de voie (102) sur ladite voie ferrée (104), ou sur ladite section (110) de voie ferrée.

3. Procédé (200 ; 300 ; 400) selon la revendication précédente, **caractérisé en ce que** l'étape (212) de consultation est réalisée préalablement à ce que le véhicule ferroviaire n'emprunte ladite voie ferrée (104), en fonction d'au moins une donnée relative à un trajet que le véhicule ferroviaire va réaliser ou à ladite voie ferrée (104).

4. Procédé (200 ; 300 ; 400) selon la revendication 2, **caractérisé en ce qu'**il comprend, préalablement à ladite étape (212) de consultation, une étape (210) de détermination d'une position géographique du véhicule sur la voie ferrée (104), ladite étape (212) de consultation étant réalisée en fonction de ladite position géographique.

5. Procédé (200 ; 300 ; 400) selon l'une quelconque des revendications précédentes, **caractérisé en ce que** l'étape (208) de détermination de la présence d'un circuit de voie (102) comprend une étape de détection d'une balise de signalisation signalant la présence ou l'absence dudit circuit de voie (102), disposé au niveau de ladite voie ferrée (104).

6. Procédé (200 ; 300 ; 400) selon l'une quelconque des revendications précédentes, **caractérisé en ce que** l'étape (208) de détermination de la présence d'un circuit de voie (102) comprend une étape de détection d'un signal émis par ledit circuit de voie (102) sur au moins une file de rail.

7. Dispositif (500) pour contrôler un équipement (602) de détection de courants harmoniques équipant un véhicule ferroviaire, **caractérisé en ce qu'**il comprend :
- au moins un moyen de détection (502, 504, 506, 508, 512, 510) agencé pour détecter la présence ou non d'au moins un circuit de voie (102) sur au moins une partie d'une voie ferrée (104), et
- un moyen (502) d'activation ou de désactivation agencé pour activer ou désactiver ledit équipement (602) sur au moins une partie de ladite voie ferrée (104) en fonction d'au moins signal de présence ou d'absence fournie par ledit moyen de détection (502, 504, 506, 508, 512, 510).

8. Dispositif (500) selon la revendication précédente, **caractérisé en ce que** le moyen de détection comprend :
- au moins un module (502, 510) de consultation d'une base de données (508), locale ou distante, mémorisant pour au moins une voie ferrée (104), ou au moins une section (110) d'une voie ferrée (104), la présence ou non d'un circuit de voie (102) sur ladite voie ferrée (104), ou sur ladite section (110) de voie ferrée, et éventuellement un moyen (504) de localisation géographique du véhicule ; et/ou
- un moyen (506) de détection d'une balise de signalisation signalant la présence ou l'absence d'un circuit de voie (102), disposée au niveau de ladite voie ferrée (104) ; et/ou
- un moyen (512) de détection d'un signal émis par ledit circuit de voie (102) sur au moins une file de rail de la voie ferrée (104).

9. Equipement de détection de courants harmoniques pour véhicule ferroviaire, comprenant :
- un dispositif (500) selon l'une quelconque des revendications 7 ou 8, ou
- des moyens agencés pour réaliser toutes les étapes du procédé (200 ; 300 ; 400) selon l'une quelconque des revendications 1 à 6.

10. Véhicule ferroviaire comprenant :
- un équipement de détection de courants harmoniques selon la revendication précédente, ou
- un dispositif (500) selon l'une quelconque des revendications 7 ou 8, ou
- des moyens agencés pour réaliser toutes les étapes du procédé (200 ; 300 ; 400) selon l'une quelconque des revendications 1 à 6.

## Patentansprüche

1. Verfahren (200; 300; 400) zum Steuern einer Einrichtung (602) zum Erfassen von harmonischen Strömen, mit der ein Schienenfahrzeug ausgerüstet ist, **dadurch gekennzeichnet, dass** es zumindest eine Iteration der folgenden Schritte umfasst:
- Bestimmen (208) der Anwesenheit oder Abwesenheit von zumindest einem Gleisschaltkreis (102) auf zumindest einem Abschnitt (110) einer Bahnstrecke (104), und
- Aktivieren oder Deaktivieren (214, 218) der Einrichtung zum Erfassen von harmonischen Strömen (602) zumindest auf dem Abschnitt (110) der Bahnstrecke (104) als Funktion von dem Bestimmen.

2. Verfahren (200; 300; 400) nach Anspruch 1, **dadurch gekennzeichnet, dass** der Schritt (208) zum Bestimmen der Anwesenheit einen Schritt (212) zur Konsultation einer Datenbank (508) umfasst, die zumindest eine Bahnstrecke (104) oder zumindest einen Abschnitt (110) einer Bahnstrecke, die Anwesenheit oder Abwesenheit eines Gleisschaltkreises (102) auf der Bahnstrecke (104) oder dem Abschnitt (110) der Bahnstrecke speichert.

3. Verfahren (200; 300; 400) nach dem vorhergehenden Anspruch, **dadurch gekennzeichnet, dass** der Schritt (212) zur Konsultation durchgeführt wird, bevor das Schienenfahrzeug die Bahnstrecke (104) benutzt, als Funktion von zumindest einer Angabe in Bezug auf eine Route, die das Schienenfahrzeug durchführen wird, oder auf die Bahnstrecke (104).

4. Verfahren (200; 300; 400) nach Anspruch 2, **dadurch gekennzeichnet, dass** es vor dem Schritt (212) zur Konsultation einen Schritt (210) zum Bestimmen einer geographischen Position des Fahrzeugs auf der Bahnstrecke (104) umfasst, wobei der Schritt (212) zur Konsultation als Funktion der geographischen Position durchgeführt wird.

5. Verfahren (200; 300; 400) nach einem der vorhergehenden Ansprüche, **dadurch gekennzeichnet, dass** der Schritt (208) zum Bestimmen der Anwesenheit eines Gleisschaltkreises (102) einen Schritt zum Erfassen einer Signalbake umfasst, die die Anwesenheit oder die Abwesenheit des Gleisschaltkreises (102) anzeigt, der an der Bahnstrecke (104) angebracht ist.

6. Verfahren (200; 300; 400) nach einem der vorhergehenden Ansprüche, **dadurch gekennzeichnet, dass** der Schritt (208) zum Bestimmen der Anwesenheit eines Gleisschaltkreises (102) einen Schritt zum Erfassen eines Signals umfasst, das von dem Gleisschaltkreis (102) auf zumindest einem Schienenstrang ausgesendet wird.

7. Vorrichtung (500) zum Steuern von eine Einrichtung (602) zum Erfassen von harmonischen Strömen, mit dem ein Schienenfahrzeug ausgerüstet ist, **dadurch gekennzeichnet, dass** sie umfasst:
- zumindest ein Mittel zum Erfassen (502, 504, 506, 508, 512, 510), das eingerichtet ist, um die Anwesenheit oder Abwesenheit von zumindest einem Gleisschaltkreis (102) auf zumindest einem Teil einer Bahnstrecke (104) zu erfassen, und
- ein Mittel (502) zum Aktivieren oder Deaktivieren, das eingerichtet ist, die Einrichtung (602) auf zumindest einem Teil der Bahnstrecke (104) als Funktion von zumindest einem Anwesenheits- oder Abwesenheitssignal zu aktivieren oder zu deaktivieren, das von dem Mittel zum Erfassen (502, 504, 506, 508, 512, 510) geliefert wird.

8. Vorrichtung (500) nach dem vorhergehenden Anspruch, **dadurch gekennzeichnet, dass** das Mittel zum Erfassen umfasst:
- zumindest ein Modul (502, 510) zur Konsultation einer lokalen oder entfernten Datenbank (508), die zumindest eine Bahnstrecke (104) oder zumindest einen Abschnitt (110) einer Bahnstrecke (104), die Anwesenheit oder Abwesenheit eines Gleisschaltkreises (102) auf der Bahnstrecke (104) oder auf dem Abschnitt (110) der Bahnstrecke, und gegebenenfalls ein Mittel (504) zur geographischen Lokalisierung des Fahrzeugs speichert; und / oder
- ein Mittel (506) zum Erfassen einer Signalbake, das die Anwesenheit oder Abwesenheit eines Gleisschaltkreises (102) signalisiert, der bei der Bahnstrecke (104) angebracht ist; und / oder
- ein Mittel (512) zum Erfassen eines Signals, das von dem Gleisschaltkreis (102) ausgesendet wird, auf zumindest einem Schienenstrang der Bahnstrecke (104).

9. Einrichtung zum Erfassen von harmonischen Strömen für ein Schienenfahrzeug, umfassend:
- eine Vorrichtung (500) nach einem der Ansprüche 7 oder 8, oder
- Mittel, die eingerichtet sind, alle Schritte des Verfahrens (200; 300; 400) nach einem der Ansprüche 1 bis 6 durchzuführen.

10. Schienenfahrzeug, umfassend:
- eine Einrichtung zum Erfassen von harmonischen Strömen nach dem vorhergehenden Anspruch, oder
- eine Vorrichtung (500) nach einem der Ansprüche 7 oder 8 oder
- Mittel, die eingerichtet sind, alle Schritte des Verfahrens (200; 300; 400) nach einem der Ansprüche 1 bis 6 durchzuführen.

## Claims

1. Method (200; 300; 400) to control equipment (602) for the detection of harmonic currents fitted to a railway vehicle, **characterized in that** it comprises at least one iteration of the following steps:
- determination (208) of the presence or otherwise of at least one track circuit (102) on at least one section (110) of a railway track (104), and
- activation or deactivation (214, 218), based on said determination, of said equipment (602) for the detection of harmonic currents at least on said section (110) of said railway track (104).

2. Method (200; 300; 400) according to claim 1, **characterized in that** the step (208) of determination of presence includes a step (212) of consultation of a data base (508) memorizing for at least one railway track (104), or at least one section (110) of a railway track, the presence or otherwise of a track circuit (102) on said railway track (104), or on said section (110) of railway track.

3. Method (200; 300; 400) according to the preceding claim, **characterized in that** the step (212) of consultation is performed prior to the railway vehicle travelling on said railway line (104), based on at least one datum relating to a route that the railway vehicle is to travel or to said railway track (104).

4. Method (200; 300; 400) according to claim 2, **characterized in that** it comprises, prior to said step (212) of consultation, a step (210) of determination of a geographic position of the vehicle on the railway track (104), said step (212) of consultation being performed on the basis of said geographical position.

5. Method (200; 300; 400) according to any of the preceding claims, **characterized in that** the step (208) of determination of the presence of a track circuit (102) comprises a step of detection of a traffic signal indicating the presence or absence of said track circuit (102), arranged near said track (104).

6. Method (200; 300; 400) according to any of the preceding claims, **characterized in that** the step (208) of determination of the presence of a track circuit (102) includes a step of detection of a signal emitted by said track circuit (102) on at least one line of track.

7. Device (500) to control equipment (602) for the detection of harmonic currents fitted to a railway vehicle, **characterized in that** it comprises:
- at least one means of detection (502, 504, 506, 508, 512, 510) arranged to detect the presence or otherwise of at least one track circuit (102) on at least one part of a railway track (104), and
- a means (502) of activation or deactivation arranged to activate or deactivate said equipment (602) on at least one part of said railway track (104) based on at least one signal of presence or absence provided by said detection means (502, 504, 506, 508, 512, 510).

8. Device (500) according to the preceding claim, **characterized in that** the means of detection comprise:
- at least one module (502, 510) of consultation of a data base (508), local or remote, memorizing for at least one railway track (104), or at least one section (110) of a railway track (104), the presence or otherwise of a track circuit (102) on said railway track (104), or on said section (110) of railway track, and possibly a means (504) of geographic location of the vehicle; and/or
- a means (506) of detection of a traffic signal indicating the presence or absence of a track circuit (102) located near said railway track (104); and/or
- a means (512) of detection of a signal emitted by said track circuit (102) on at least one line of the railway track (104).

9. Equipment for the detection of harmonic currents for a railway vehicle, comprising:
- a device (500) according to either of claims 7 or 8, or
- means arranged to perform all of the steps of the method (200; 300; 400) according to any of claims 1 to 6.

10. Railway vehicle comprising:
- equipment for the detection of harmonic currents according to the preceding claim, or
- a device (500) according to either of claims 7 or 8, or
- means arranged to perform all of the steps of the method (200, 300, 400) according to any of claims 1 to 6.
